(19) **Europäisches Patentamt**
**European Patent Office**
**Office européen des brevets**

(11) **EP 1 488 254 B1**

(12) **EUROPÄISCHE PATENTSCHRIFT**

(45) Veröffentlichungstag und Bekanntmachung des Hinweises auf die Patenterteilung:
**19.05.2010 Patentblatt 2010/20**

(51) Int Cl.:
**G01S 17/58** (2006.01)     **G01S 17/93** (2006.01)

(21) Anmeldenummer: **03714650.3**

(22) Anmeldetag: **21.02.2003**

(86) Internationale Anmeldenummer:
**PCT/DE2003/000543**

(87) Internationale Veröffentlichungsnummer:
**WO 2003/083511 (09.10.2003 Gazette 2003/41)**

(54) **VERFAHREN ZUR MESSUNG DER RELATIVGESCHWINDIGKEIT EINES OBJEKTS**

METHOD FOR DETERMINING THE RELATIVE SPEED OF AN OBJECT

PROCEDE POUR MESURER LA VITESSE RELATIVE D'UN OBJET

(84) Benannte Vertragsstaaten:
**DE ES FR GB IT SE**

(30) Priorität: **28.03.2002 DE 10213901**

(43) Veröffentlichungstag der Anmeldung:
**22.12.2004 Patentblatt 2004/52**

(73) Patentinhaber: **Conti Temic microelectronic GmbH**
**90411 Nürnberg (DE)**

(72) Erfinder:
• **BEUSCHEL, Michael**
**85134 Stammham (DE)**
• **NASTASIE, Alexander**
**85057 Ingolstadt (DE)**

(56) Entgegenhaltungen:
**DE-A- 4 115 747     US-A- 5 471 215**
**US-A- 5 621 514**

**Beschreibung**

Die Erfindung betrifft ein Verfahren zur Messung der Relativgeschwindigkeit eines Objekts gemäß Patentanspruch 1.

Verfahren zur Ermittlung von Objektabständen werden verstärkt in Hinderniswamsystemen für Kraftfahrzeuge eingesetzt, um die Fahrer der Kraftfahrzeuge vor Gefahrenquellen auf der Fahrbahn zu warnen. Aus der DE 41 15 747 C2 ist beispielsweise ein Verfahren zur Hinderniserkennung bekannt, bei dem ein Beobachtungsraum vor einem Fahrzeug mit einer Laserquelle wiederholt abgetastet wird, um aus der Signallaufzeit des von der Laserquelle ausgesendeten und an einem Objekt reflektierten Lichts den Objektabstand zu berechnen und den Fahrer in Abhängigkeit des ermittelten Objektabstands durch akustische oder optische Signale vor einer möglichen Kollision mit dem Objekt zu warnen.

Es wäre sinnvoll, bei der Abschätzung der Kollisionswahrscheinlichkeit auch die Geschwindigkeit der sich dem Fahrzeug nähernden Objekte zu ermitteln. Diese ließe sich zwar durch eine Differentiation des zeitlichen Verlaufs des Objektabstands ermitteln, das Ergebnis wäre aber aufgrund des durch die Differentiation verstärkten Rauschens ungenau. Das Signal-Rausch-Verhältnis des Meßergebnisses könnte zwar durch eine Filterung unterdrückt werden, die Filterung hätte aber eine unerwünschte Zeitverzögerung bei der Bereitstellung des Meßergebnisses zur Folge. Weiterhin wäre es denkbar, das Signal-Rausch-Verhältnis durch Erhöhung der Strahlungsleistung der Laserquelle zu verbessern, eine Erhöhung der Strahlungsleistung ist aber nicht erwünscht, weil dies bei Personen oder Tieren, die in Richtung der Laserquelle blicken könnten, zu einer Augenschädigung führen könnte.

Der Erfindung liegt daher die Aufgabe zugrunde, ein Verfahren zur Ermittlung der Relativgeschwindigkeit eines Objekts anzugeben, das mit geringem Aufwand durchführbar ist und genaue Meßergebnisse liefert.

Die Aufgabe wird durch die Merkmale des Patentanspruchs 1 gelöst. Vorteilhafte Ausgestaltungen und Weiterbildungen ergeben sich aus den Unteransprüchen.

Erfindungsgemäß wird der Objektabstand eines Objekts bezüglich eines Referenzorts wiederholt in aufeinanderfolgenden Zyklen jeweils nach Ablauf einer vorgegebenen Zyklusperiode ermittelt. Des weiteren wird die Anzahl der Zyklen ermittelt, innerhalb derer der Objektabstand soweit abnimmt oder soweit zunimmt, daß ein vorgegebenes Abstandsband vollständig durchlaufen wird. Das heißt, es werden, wenn es um die Ermittlung der Geschwindigkeit eines sich dem Referenzort nähernden Objekts geht, die Zyklen gezählt, innerhalb derer der Objektabstand sich von einem oberhalb eines oberen Abstandsschwellwerts liegenden oberen Objektabstandswert bis zu einem unterhalb eines unteren Abstandsschwellwerts liegenden unteren Objektabstandswert verringert. Geht es hingegen um die Ermittlung der Geschwindigkeit eines sich vom Referenzort entfernenden Objekts, werden die Zyklen gezählt, innerhalb derer der Objektabstand sich von einem unterhalb eines unteren Abstandsschwellwerts liegenden unteren Objektabstandswert bis zu einem oberhalb eines oberen Abstandsschwellwerts liegenden oberen Objektabstandswert erhöht. Die Relativgeschwindigkeit des Objekts wird dann aus der Differenz zwischen dem vor dem Eintritt in das Abstandsband ermittelten Objektabstand und dem nach dem Austritt aus dem Abstandsband ermittelten Objektabstand, d. h. aus der Differenz zwischen dem oberen und unteren Objektabstandswert, und aus der ermittelten Anzahl der Zyklen berechnet.

Vorzugsweise wird vor der Berechnung der Geschwindigkeit eine Plausibilitätsprüfung vorgenommen, indem geprüft wird, ob der in einem Zyklus ermittelte Objektabstand sich von dem im vorangehenden Zyklus ermittelten Objektabstand um mehr als um einen vorgegebenen Schwellwert unterscheidet. Trifft dies in einer bestimmten Anzahl von aufeinanderfolgenden Zyklen zu, werden die ermittelten Objektabstandswerte als nicht plausibel angesehen und die Geschwindigkeitsmessung wird unterbrochen und von neuem gestartet.

Die US-A-5 621 514 betrifft ein Laser-Radar-System, das zufällige und pseudozufällige optische Pulsfolgen und eine Signalverarbeitung einsetzt, die eindeutige Bereichs- und Dopplergeschwindigkeitsdaten bereitstellen kann. Mit diesem System kann eine Relativgeschwindigkeit mittels Doppleranalyse bestimmt werden.

Die US-A-5 471 215 offenbart eine kostengünstige Radar-Vorrichtung zum Messen des Abstands zu einem Ziel und der relativen Geschwindigkeit des Ziels. Die Vorrichtung umfasst einen Sender zum Aussenden eines Pulssignals und einen Empfänger zum Empfangen eines vom Ziel reflektierten Pulssignals. Das empfangene Signal wird in ein Binärsignal konvertiert, da durch einen Abtaster abgetastet und in einer kumulativen Speichereinheit akkumuliert wird. Adressen der Speichereinheit entsprechen einem Intervall zwischen dem Aussenden und Empfangen des Pulssignals. Gemäß diesem Intervall werden der Abstand und die Relativgeschwindigkeit mit einer hohen Geschwindigkeit berechnet. Um den Signal-Rauschabstand zu verbessern und sogar ein schwaches reflektiertes Signal schnell zu detektieren, führt die Vorrichtung eine Vielzahl von Akkumulationsoperationen durch.

In einer vorteilhaften Ausgestaltung der des erfindungsgemäßen Verfahrens wird der Objektabstand durch Messung der Impulslaufzeit eines vom Referenzort in einen Meßraum ausgesendeten und aus dem Meßraum zum Referehzort zurückreflektierten Lichtimpulses ermittelt.

Hierbei wird der die Impulslaufzeit bestimmende Empfangzeitpunkt des zurückreflektierten Lichtimpulses vorzugsweise dadurch ermittelt, daß der zurückreflektierte Lichtimpuls zur Erzeugung eines Empfangssignals detektiert wird und daß der Zeitpunkt ermittelt wird, der dem Schwerpunkt des Empfangssignals entspricht.

Das Empfangsignal wird hierzu vorzugsweise lediglich in einem begrenzten Zeitbereich ausgewertet. Der Zeitbereich wird dabei der derart gewählt wird, daß das Maximum des Empfangssignals in diesem Zeitbereich, beispielsweise in dessen Mitte, liegt.

Vorzugsweise wird der Empfangszeitpunkt der zurückreflektierten Lichtimpulses lediglich dann ermittelt, wenn das Maximum des Empfangssignals oberhalb eines vorgegebenen Rauschpegels liegt.

Vorteilhafterweise wird des weiteren eine Rauschkompensation vorgenommen, indem das Empfangssignal um einen vorgegebenen Rauschanteil reduziert wird, und/oder eine Temperaturkompensation vorgenommen, um temperaturabhängige Störbeiträge aus der Impulslaufzeit zu kompensieren.

Vorzugsweise werden Lichtimpulse in unterschiedliche jeweils einen Kanal darstellende Raumabschnitte des Meßraums ausgesendet und die zurückreflektierten Lichtimpulse kanalbezogen ausgewertet. Damit ist es möglich, neben den ermittelten Relativgeschwindigkeitswerten über deren Zuordnung zu jeweils einem der Kanäle auch eine Ortsinformation über die sich im Meßraum befindenden Objekte zu gewinnen.

Das erfindungsgemäße Verfahren eignet sich bestens für den Einsatz in einem Insassenrückhaltesystem für Kraftfahrzeuge. Bei einem derartigen Anwendungsfall dient das erfindungsgemäße Verfahren der Pre-Crash-Sensierung, d. h. der Erkennung der Gefahr einer drohenden Kollision des Kraftfahrzeugs mit einem sich dem Kraftfahrzeug nähernden Objekt. Wird eine derartige Gefahr erkannt, lassen sich Auslösekriterien für Rückhaltemittel, beispielsweise für einen Airbag, geeignet an ein mögliches Unfallszenario anpassen. Dies hat eine gezieltere Auslösung der Rückhaltemittel und somit eine Erhöhung der bezweckten Schutzwirkung für die Fahrzeuginsassen zur Folge.

Die Berechnung der Geschwindigkeit auf der Grundlage der Zeit, innerhalb derer der Objektabstand soweit abnimmt, daß das durch die Abstandsschwellwerte definierte Abstandsband vollständig durchlaufen wird, erweist sich hierbei als besonders vorteilhaft, da das Abstandsband derart definierbar ist, daß lediglich Lichtimpulse ausgewertet werden, die in dem für die Pre-Crash-Sensierung wichtigen Nahbereich reflektiert werden. Die Geschwindigkeit eines Objekts wird somit zum richtigen Zeitpunkt gemessen, d. h. dann wenn das Objekt mit hoher Wahrscheinlichkeit eine Gefahr für das Kraftfahrzeug darstellen könnte. Zudem weisen die im Nahbereich reflektierten Lichtimpulse eine höhere Amplitude und damit ein günstigeres Signal-Rausch-Verhältnis auf als die im Fernbereich reflektierten Lichtimpulse. Dies hat zur Folge, daß auch die Auswertung der im Nahbereich reflektierten Lichtimpulse zu genaueren Objektabstandswerten und damit auch zu genaueren Geschwindigkeitswerten führt als die Auswertung der im Fernbereich reflektierten Lichtimpulse.

Die Erfindung wird nachfolgend anhand eines Ausführungsbeispiels und anhand von Figuren näher erläutert. Es zeigen:

Figur 1 a-1 c    Impulsdiagramme eines Sendesignals und eines Empfangssignals,

Figur 2    ein Beispiel für den zeitlichen Verlauf von Objektabstandswerten eines sich dem Referenzort nähernden Objekts,

Figur 3a-3c    ein Flußdiagramm zur Ermittlung der Geschwindigkeit des Objekts.

Das erfindungsgemäße Verfahren wird in einem Insassenrückhaltesystem für Kraftfahrzeuge zur Pre-Crash-Sensierung eingesetzt. Die Wahrscheinlichkeit einer drohenden Kollision wird dabei durch Detektion von Objekten, die sich innerhalb eines Meßraums vor dem Kraftfahrzeug befinden, und durch Ermittlung der Geschwindigkeit von sich ggf. dem Kraftfahrzeug nähernden Objekten abgeschätzt. Die Objekte werden durch Aussenden von Lichtimpulsen und Detektion der an den Objekten zurückreflektierten Lichtimpulse detektiert, wobei die Lichtimpulse vorteilhafterweise sequentiell in unterschiedliche jeweils einen Kanal darstellende Raumabschnitte des Meßraums ausgesendet und kanalbezogen detektiert werden, um neben der Abstandsinformation auch eine Information über den Ortsbereich des den jeweiligen Lichtimpuls reflektierenden Objekts zur gewinnen. Aus den Echozeiten, d. h. den Impulslaufzeiten der ausgesendeten und reflektierten Lichtimpulse werden dann Objektabstände und aus der zeitlichen Änderung der Objektabstände die Geschwindigkeiten der Objekte ermittelt.

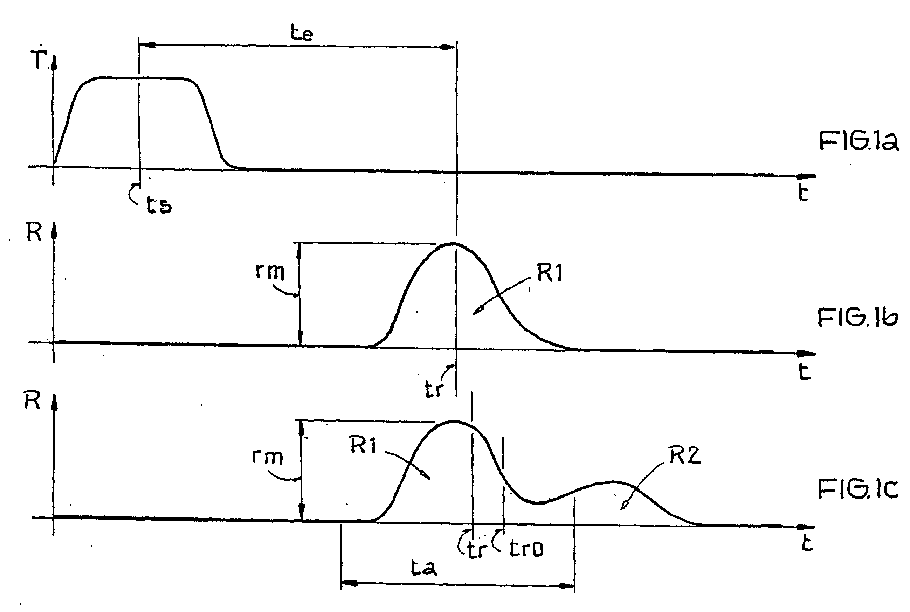

Die Messung der Impulslaufzeit eines Lichtimpulses wird nachfolgend anhand der Figuren 1a bis 1c näher beschrieben.

Die Figur 1a zeigt den zeitlichen Verlauf eines impulsförmigen Sendesignals T, das einer sich am Kraftfahrzeug - dem Referenzort - befindenden Strahlungsquelle zugeführt wird. Der Sendezeitpunkt ts wird durch eine Steuereinheit vorgegeben und ist daher bekannt. Die Strahlungsquelle sendet in Antwort auf das Sendesignal T einen Lichtimpuls beispielsweise in Form eines gebündelten oder sich aufweitenden Infrarotlaserstrahls aus. Trifft dieser Lichtimpuls auf ein Objekt, wird er zum Teil zum Kraftfahrzeug zurückreflektiert und dort von einer Detektoranordnung detektiert.

Figur 1b zeigt ein Empfangssignal R, das von der einen Photodetektor umfassenden Detektoranordnung durch Detektion des zurückreflektierten Lichtimpulses erzeugt wird. Die Detektion kann dabei auch Signalverarbeitungsschritte umfassen, insbesondere eine Verstärkung, Bandbegrenzung und Störlichtkompensation.

Das Empfangssignal R weist einen Impuls R1 auf, dessen Mitte den Empfangszeitpunkt tr des reflektierten Lichtimpulses markiert.

Der zeitliche Abstand zwischen dem Sendezeitpunkt ts und dem Empfangszeitpunkt tr stellt die zu messende Impulslaufzeit te dar. Zur Ermittlung der Impulslaufzeit te ist daher der Empfangszeitpunkt tr zu ermitteln. Dieser ist definitionsgemäß gleich demjenigen Zeitpunkt, der im Schwerpunkt des Empfangssignals R also im Schwerpunkt des Impulses R1 liegt. Dieser dem Schwerpunkt des Empfangssignals R entsprechende Zeitpunkt tr läßt sich nach folgender Gleichung berechnen

$$tr = \frac{\int t \cdot R dt}{\int R dt},$$

wobei R das Empfangssignal R darstellt und t die Zeit darstellt. Die Integration ist dabei über den gesamten Impuls R1 vorzunehmen.

Das Empfangssignal R kann auch weitere Impulse geringerer Amplitude aufweisen, die zu späteren Zeitpunkten auftreten und aus der Reflektion des Lichtimpulses an entfernteren und damit weniger relevanten Objekten resultieren.

Figur 1c zeigt einen derartigen weiteren Impuls R2. Dieser kann die Messung verfälschen, wenn das gesamte Empfangssignal R der Ermittlung des Empfangszeitpunkts zugrundegelegt wird. Als Empfangszeitpunkt würde man dann statt den in Figur 1b gezeigten Zeitpunkt tr den von diesem Zeitpunkt stark abweichenden Zeitpunkt tr0 erhalten. Um diesen Fehler gering zu halten, wird das Maximum rm des Empfangssignals R ermittelt, ein um das Maximum rm herum liegender begrenzter Zeitbereich ta ausgewählt und lediglich der in diesem Zeitbereich ta liegende Anteil des Empfangssignals R der Ermittlung des Empfangszeitpunkts tr zugrundegelegt. Das heißt, bei der Ermittlung des Zeitpunkts tr gemäß der o.g. Gleichung wird die Integration lediglich über den Zeitbereich ta vorgenommen. Dadurch erhält man für die beiden in den Figuren 1b und 1c dargestellten Verläufe des Empfangssignals R nur geringfügig voneinander abweichende Empfangszeitpunkte tr.

Die Impulslaufzeit te ist ein Maß des Abstands zu dem den Lichtimpuls reflektierenden Objekt. Aus ihr läßt sich der Objektabstand d nach der Gleichung d = c • te/2 berechnen, wobei c die Lichtgeschwindigkeit darstellt. Durch zyklische Wiederholung der Messung erhält man dann einer Reihe von Objektabstandswerten, die den Bewegungsverlauf des Objekts relativ zum Kraftfahrzeugs repräsentieren. Es ist denkbar, während eines Zyklus mehrere Lichtimpulse auszusenden, aus den resultierenden Empfangssignalen durch Mittlung ein gemitteltes Empfangssignal zu erzeugen und den Empfangszeitpunkt tr aus diesem gemittelten Empfangssignal zu ermitteln. Hierdurch wird das Signal-Rausch-Verhältnis des Meßergebnisses verbessert.

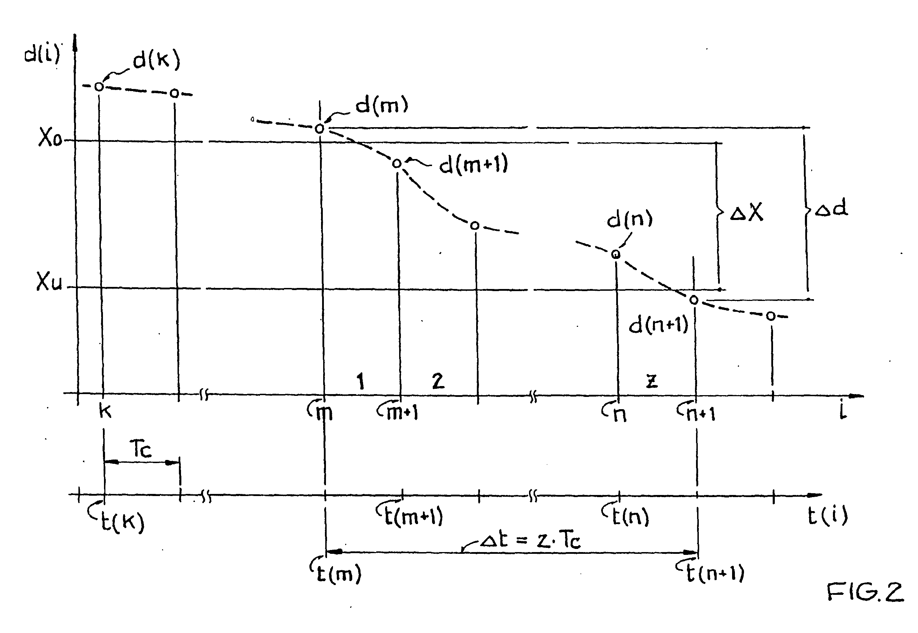

Figur 2 zeigt einen beispielhaften Verlauf von Objektabstandswerten d(i) eines sich dem Fahrzeug nähernden Objekts. Diese Objektabstandswerte d(i) werden jeweils nach Ablauf eines Zyklus, d. h. zu Zeitpunkten t(i) ermittelt. Die Zeitpunkte t(i) sind jeweils um eine vorgegebene Zyklusperiode Tc voneinander beabstandet. Der Index i stellt einen Laufindex dar. Die Figur zeigt noch ein Abstandsband ΔX, das in dem für die Pre-Crash-Erkennung relevanten Nahbereich des Kraftfahrzeugs liegt und das durch einen oberen Abstandsschwellwert Xo und einen unteren Abstandsschwellwert Xu begrenzt wird. Von den dargestellten Objektabstandswerten d(i) liegen die Werte d(k) bis d(m) oberhalb des Abstandsbands ΔX, die Werte d(m+1) bis d(n) innerhalb des Abstandsbands ΔX und die übrigen Werte unterhalb des Abstandsbands ΔX.

Die Ermittlung der Relativgeschwindigkeit v des Objekts basiert auf der Identifizierung zweier Objektabstandswerte d(i), und zwar auf der Identifizierung des letzten vor dem Eintritt in das Abstandsband ΔX ermittelten Objektabstandswerts d(i), im vorliegenden Fall also des Objektabstandswerts d(m), und des ersten nach dem vollständigen Durchlaufen des Abstandsbands ΔX ermittelten Objektabstandswerts d(i), im vorliegenden Fall also des Objektabstandswerts d(n+1), sowie auf dem Zählen der jeweils eine Zyklusperiode Tc dauernden Zyklen, innerhalb derer der Objektabstand d(i) sich von dem einen identifizierten Objektabstandswert d(m) zu dem um eine Differenz Δd geringeren anderen identifizierten Objektabstandswert d(n+1) verringert. Das Produkt aus der Anzahl z der gezählten Zyklen und der Zyklusperiode Tc stellt die Zeit Δt dar, innerhalb derer der Objektabstand d(i) sich um die Differenz Δd verringert. Die gesuchte Relativgeschwindigkeit v läßt sich daher nach der Gleichung v = Δd/Δt mit Δd = d(m) - d(n+1) und Δt = z • Tc berechnen.

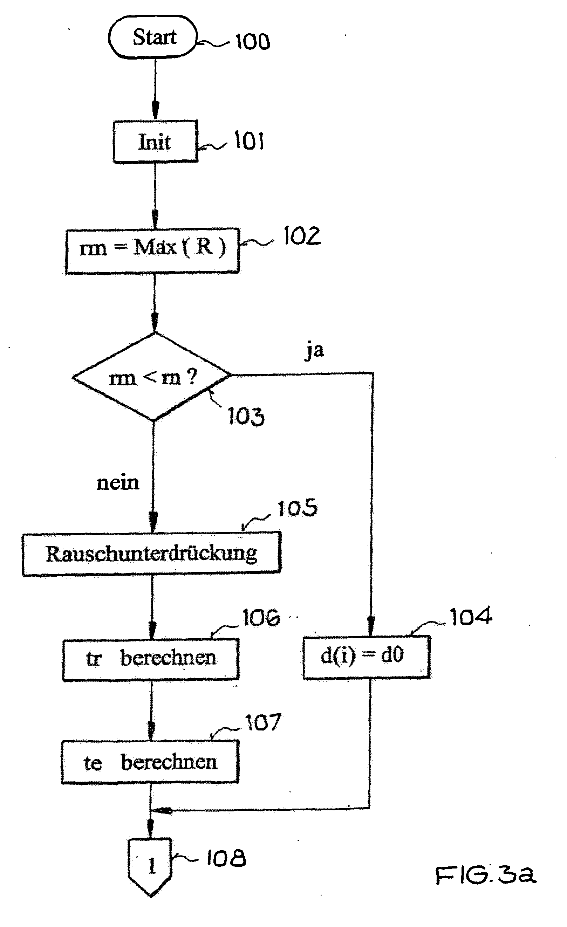

Der Algorithmus zur Ermittlung der Relativgeschwindigkeit v wird nachfolgend anhand des in den Figuren 3a bis 3c gezeigten Flußdiagramms näher erläutert. Figur 3a zeigt dabei die Verfahrensschritte zur Ermittlung eines Objektabstandswerts d(i). Es versteht sich von selbst, daß der Verlauf des Empfangssignals R hierbei durch eine Reihe von digitalen Abtastwerten repräsentiert wird. Die Abtastwerte erhält man dabei als Ergebnis einer Abtastung des Empfangssignals R mit nachfolgender Analog-Digital-Wandlung.

Der Algorithmus ist ein Unterprogramm, das nach der Erfassung des Empfangssignals R von einem Betriebprogramm aufgerufen wird. Gemäß Figur 3a erfolgt der Aufruf im Schritt 100. Im nachfolgenden Schritt 101 werden dann Daten initialisiert, insbesondere werden die das Empfangssignal R repräsentierenden Abtastwerte in entsprechende Variablen eingelesen. Im nächsten Schritt 102 wird dann das Maximum rm des Empfangssignals R ermittelt. Anschließend wird im Schritt 103 geprüft, ob das Maximum rm kleiner als ein vorgegebener Rauschpegel rn ist. Trifft dies zu, wird zu Schritt 104 ansonsten zu Schritt 105 verzweigt. Im Schritt 104 wird der aktuelle Objektabstandswert d(i) auf einen Abstandsvorgabewert d0 gesetzt. Im Schritt 105 wird eine Rauschunterdrückung vorgenommen, indem die das Empfangssignal R repräsentierenden Abtastwerte jeweils um einen durch den Rauschpegel rn bestimmten Rauschanteil reduziert werden. Im nachfolgenden Schritt 106 wird der Empfangszeitpunkt tr in der anhand der Figur 1c beschriebenen Weise berechnet. Das heißt, es wird der Zeitpunkt berechnet, der dem Schwerpunkt eines ausgewählten Abschnitts des Empfangssignals R entspricht, wobei der Abschnitt derart gewählt wird, daß das Maximum rm in dessen Mittel liegt. Im nachfolgenden Schritt 107 wird dann die Impulslaufzeit te als Differenz zwischen dem ermittelten Empfangszeitpunkt tr und dem bekannten Sendezeitpunkt ts berechnet. Es ist zudem denkbar, hierbei auch eine ggf. vorhandene Temperaturabhängigkeit des Sendezeitpunkts ts zu kompensieren. Dies setzt voraus, daß der Einfluß von Temperaturänderungen auf den Sendezeitpunkt ts bekannt ist und daß die Temperatur der den Lichtimpuls aussendenden Strahlungsquelle erfaßt wird. Die Impulslaufzeit te wird in den nachfolgenden Schritten unmittelbar oder nach einer Skalierung mit einem Proportionalitätsfaktor als der in einem Zyklus ermittelte Objektabstand d(i) behandelt.

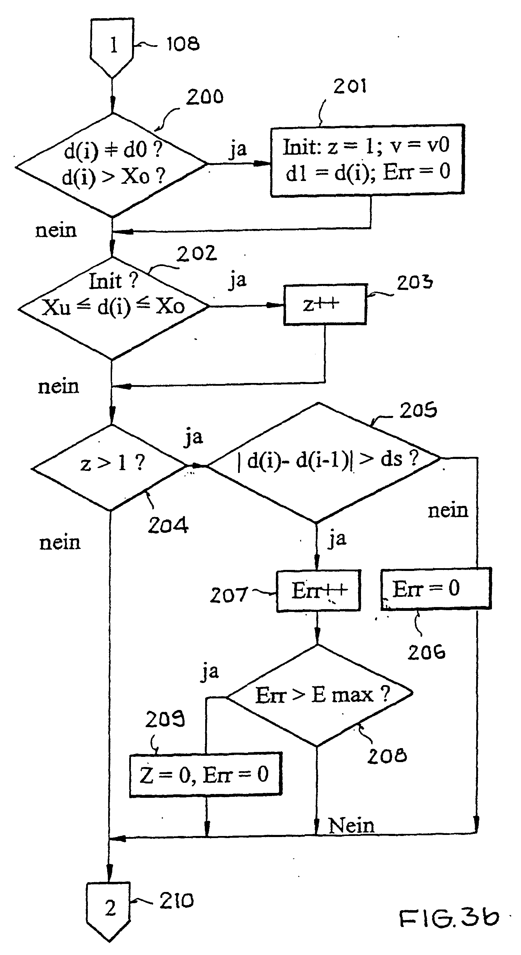

Den Schritten 107 und 104 folgt gemäß Figur 3b über die Verbindungsstelle 108 der Schritt 200. Im Schritt 200 wird geprüft, ob der aktuelle Objektabstandswert d(i) ein gültiger Wert ist, d. h. ob er ungleich dem Abstandsvorgabewert d0 ist, und ob der aktuelle Objektabstandswert d(i) größer als der obere Abstandsschwellwert Xo ist. Sind diese Bedingungen erfüllt, wird über Schritt 201 zu Schritt 202 ansonsten direkt zu Schritt 202 verzweigt. Im Schritt 201 wird eine Initialisierung vorgenommen, und zwar wird ein Zyklenzähler z auf den Wert 1 gesetzt, die Geschwindigkeit v auf einen Geschwindigkeitsvorgabewert v0 gesetzt, ein Fehlerzähler Err auf den Wert 0 gesetzt und der aktuelle Objektabstandswert d(i) als Merkwert d1 zwischengespeichert. Im Schritt 202 wird geprüft, ob seit Beginn der Messung eine Initialisierung gemäß Schritt 201 bereits durchgeführt wurde und ob der aktuelle Objektabstandswert d(i) zwischen den Abstandsschwellwerten Xo und Xu, d. h. innerhalb des Abstandsbands ΔX liegt. Treffen diese Bedingungen zu, wird über Schritt 203 zu Schritt 204 ansonsten direkt zu Schritt 204 verzweigt. Im Schritt 203 wird der Zyklenzähler z um 1 inkrementiert. Im Schritt 204 wird dann geprüft, ob der Zyklenzähler z größer als 1 ist. Trifft dies zu, d. h. wurde seit Beginn der Messung bereits ein gültiger oberhalb des oberen Abstandsschwellwerts Xo liegender Objektsabstandswert und anschließend ein innerhalb des Abstandsbands ΔX liegender Objektabstandswert ermittelt, wird zu Schritt 205 ansonsten über die Verbindungsstelle 210 zu Schritt 300 verzweigt. In Schritt 205 wird geprüft, ob der aktuelle Objektabstandswert d(i) sich von dem vorherigen Objektabstandswert d(i-1) betragsmäßig um mehr als um einen vorgegebenen Schwellwert ds unterscheidet. Trifft dies zu, wird zu Schritt 207 ansonsten über Schritt 206 zu der Verbindungsstelle 210 verzweigt. Im Schritt 206 wird der Fehlerzähler Err auf 0 gesetzt, im Schritt 207 wird er hingegen um 1 inkrementiert. Nach Schritt 207 wird im Schritt 208 geprüft ob der Fehlerzähler Err grö-βer als ein vorgegebener Wert Emax ist. Ist diese Bedingung erfüllt, was dann der Fall ist, wenn eine dem Wert Emax entsprechende Anzahl von aufeinanderfolgenden Objektabstandswerten sich vom jeweils vorherigen Objektabstandswert betragsmä-βig um mehr als um den Schwellwert ds unterscheiden, wird über Schritt 209 zur Verbindungsstelle 210 ansonsten direkt zur Verbindungsstelle 210 verzweigt. Im Schritt 209 werden der Zyklenzähler z und der Fehlerzähler Err auf 0 gesetzt, was der Beendigung der aktuellen Messung und dem Beginn einer neuen Messung entspricht.

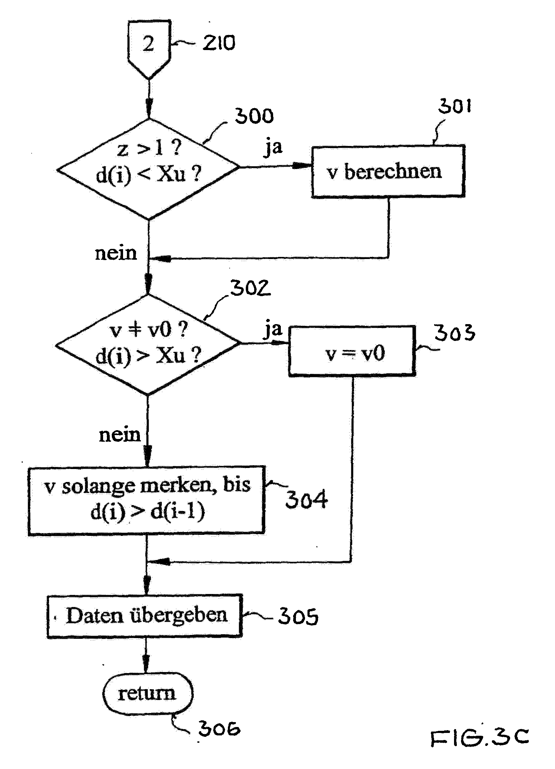

Gemäß Figur 3c folgt auf die Verbindungsstelle 21.0 der Schritt 300, in welchem geprüft wird, ob der Zyklenzähler z größer als 1 ist und ob der aktuelle Objektabstandswert d(i) unterhalb des unteren Abstandsschwellwert Xu liegt. Treffen dies Bedingungen zu, wird über Schritt 301 zu Schritt 302 ansonsten direkt zu Schritt 302 verzweigt. In Schritt 301 wird die Geschwindigkeit v in der anhand Figur 2 beschriebenen Weise berechnet, d. h es wird der Wert $v = K \cdot (d1 - d(i))/z$ berechnet, wobei K einen Skalierungsfaktor darstellt, d1 den in Schritt 201 als Merkwert zwischengespeicherten Objektabstand darstellt) d(i) den aktuellen Objektabstandswert darstellt und z den aktuellen Stand des Zyklenzählers z darstellt. Der aktuelle Stand des Zyklenzählers ist dabei gleich der Anzahl der Zyklen, innerhalb derer der Objektabstand sich von dem Merkwert d1 bis zum aktuellen Objektabstandswert d(i) verringert hat. In Schritt 302 wird geprüft, ob die Geschwindigkeit v gemäß Schritt 301 bereits berechnet wurde, was dann der Fall ist, wenn der Geschwindigkeitswert v ungleich dem Geschwindigkeitsvorgabewert v0 ist, und es wird ferner geprüft, ob der aktuelle Objektabstandswert d(i) größer als der untere Abstandsschwellwert Xu ist. Sind diese Bedingungen erfüllt, wird über Schritt 303 ansonsten über Schritt 304 zu Schritt 305 verzweigt. In Schritt 303 wird der Geschwindigkeitswert v auf den Geschwindigkeitsvorgabewert v0 gesetzt. In Schritt 304 wird der berechnete Geschwindigkeitswert v solange unveränderbar gemerkt, bis der Objektabstand wieder ansteigt. Zweck dieses Schrittes ist es, zu verhindern, daß der einmal ermittelte Geschwindigkeitswert v unmittelbar nach einer Kollision des Fahrzugs mit dem sich ihm nähernden Objekt aktualisiert wird, weil ein nach der Kollision ermittelter Geschwindigkeitswert fehlerhaft sein könnte und die Auslösekriterien für die Rückhaltemittel bei der Auswertung fehlerhafter Geschwindigkeitswerte falsch gesetzt werden könnten. In nachfolgenden Schritt 305 werden die ermittelten Objektabstands- und Geschwindigkeitswerte an ein Airbagsteuergerät übergeben, das anhand der übergebenen Werte die Gefahr einer drohenden Kollision abschätzt und die Auslösekriterien der Rückhaltemittel in Abhängigkeit der abgeschätzten Kollisionsgefahr setzt. Mit dem nächsten Schritt 306 wird dann die aktuelle Messung beendet und zu dem Betriebsprogramm zurückgesprungen.

Im vorliegenden Ausführungsbeispiel basiert die Messung des Objektabstands auf der Ermittlung der Impulslaufzeit eines zum Objekt ausgesendeten und am Objekt reflektierten Lichtimpulses. Selbstverständlich lassen sich die Objektabstandswerte auch durch Auswertung der Impulslautzeit von anderen Strahlungsarten, beispielsweise durch Auswertung der Laufzeit von Radarimpulsen oder Ultraschallimpulsen zu ermitteln.

## Patentansprüche

1. Verfahren zur Messung der Relativgeschwindigkeit (v) zwischen einem Objekt und einem Referenzort, bei dem der Objektabstand (d (i)) des Objekts zum Referenzort zyklisch jeweils nach Ablauf einer vorgegebenen Zyklusperiode (Tc) ermittelt wird und die Anzahl (z) der Zyklen ermittelt wird, innerhalb derer der Objektabstand (d (i)) sich soweit ändert, dass ein vorgegebenes Abstandsband (ΔX), das durch einen oberen Abstandsschwellwert (Xo) und einen unteren Abstandsschwellwert (Xu) begrenzt wird, vollständig durchlaufen wird, und bei dem aus der Differenz (Ad) zwischen dem vor dem Eintritt in das Abstandsband (ΔX) ermittelten Objektabstand (d (m)) und dem nach dem Austritt aus dem Abstandsband (ΔX) ermittelten Objektabstand (d (n+1)) und aus der ermittelten Anzahl (z) der Zyklen die Relativgeschwindigkeit (v) des Objekts berechnet wird, **dadurch gekennzeichnet, dass** die Messung der Relativgeschwindigkeit beendet und von neuem gestartet wird, wenn in einer bestimmten Anzahl (Emax) von aufeinanderfolgenden Zyklen Abstandswerte als Objektabstand (d (i)) ermittelt werden, die sich vom jeweils vorherigen Abstandswert um mehr als um einen vorgegebenen Schwellwert (ds) unterscheiden.

2. Verfahren nach Anspruch 1, **dadurch gekennzeichnet, daß** ein ermittelter Geschwindigkeitswert (v) solange unveränderbar gemerkt wird, bis der in einem Zyklus ermittelte Objektabstand (d(i)) gegenüber dem im vorherigen Zyklus ermittelten Objektabstand ansteigt.

3. Verfahren nach einem der vorherigen Ansprüche, **dadurch gekennzeichnet, daß** der in einem Zyklus ermittelte Objektabstand (d(i)) durch Messung der Impulslaufzeit (te) eines in einen Meßraum ausgesendeten und aus dem Meßraum zurückreflektierten Lichtimpulses ermittelt wird.

4. Verfahren nach Anspruch 3, **dadurch gekennzeichnet, daß** zur Messung der Impulslaufzeit (te) des ausgesendeten und zurückreflektieren Lichtimpulses ein Empfangszeitpunkt (tr) als Zeitpunkt des Empfangs des zurückreflektierten Lichtimpulses ermittelt wird, indem der zurückreflektierte Lichtimpuls zur Erzeugung eines Empfangssignals (R) detektiert wird und ein dem Schwerpunkt des Empfangssignals (R) entsprechender Zeitpunkt (tr) als Empfangszeitpunkt (tr) des zurückreflektierten Lichtimpulses ermittelt wird.

5. Verfahren nach Anspruch 4, **dadurch gekennzeichnet, daß** das Maximum (rm) des Empfangssignal (R) ermittelt wird und daß lediglich ein um das Maximum (rm) herum liegender Zeitbereich (ta) des Empfangssignal (R) der Ermittlung des Empfangszeitpunkts (tr) des zurückreflektierten Lichtimpulses zugrunde gelegt wird.

6. Verfahren nach Anspruch 5, **dadurch gekennzeichnet, daß** der Empfangszeitpunkt (tr) des zurückreflektierten Lichtimpulses lediglich dann ermittelt wird, wenn das Maximum (rm) des Empfangssignals (R) oberhalb eines vorgegebenen Rauschpegels (m) liegt.

7. Verfahren nach Anspruch 6, **dadurch gekennzeichnet, daß** das Empfangssignal (R) oder der der Ermittlung des Empfangszeitpunkts (tr) zugrundegelegte Zeitbereich (ta) des Empfangssignals (R) vor der Ermittlung des Empfangszeitpunkts (tr) um einen vorgegebenen Rauschanteil reduziert wird.

8. Verfahren nach einem der Ansprüche 3 bis 7, **dadurch gekennzeichnet, daß** eine Temperaturkompensation zur Reduzierung von temperaturabhängigen Störbeiträgen aus der Impulslaufzeit (te) vorgenommen wird.

9. Verfahren nach einem der Ansprüche 3 bis 8, **dadurch gekennzeichnet, daß** Lichtimpulse in unterschiedliche jeweils einen Kanal darstellende Raumabschnitte des Meßraums ausgesendet werden und daß die zurückreflektierten Lichtimpulse kanalbezogen ausgewertet werden.

10. Verwendung des Verfahrens nach einem der vorherigen Ansprüche zum Erkennen einer drohenden Kollision eines Fahrzeugs mit einem sich dem Fahrzeug nähernden Objekt.

## Revendications

1. Procédé de mesure de la vitesse relative (v) entre un objet et un lieu de référence, dans lequel la distance objet (d(i)) de l'objet au lieu de référence est déterminée de façon cyclique respectivement après l'expiration d'une période cyclique (Tc) prédéfinie, et dans lequel il est déterminé le nombre (z) de cycles à l'intérieur desquels la distance objet (d(i)) varie au point qu'une bande de distance ($\Delta X$) prédéfinie, qui est limitée par une valeur de seuil de distance supérieure (Xo) et une valeur de seuil de distance inférieure (Xu), est entièrement parcourue, et dans lequel la vitesse relative (v) de l'objet est calculée à partir de la différence (Ad) entre la distance objet (d (m)) déterminée avant l'entrée dans la bande de distance ($\Delta X$) et la distance objet (d(n+1)) déterminée après la sortie hors de la bande de distance ($\Delta X$), et à partir du nombre (z) de cycles déterminé, **caractérisé en ce que** la mesure de la vitesse relative est terminée et commencée de nouveau quand, dans un nombre (Emax) défini de cycles successifs, il est déterminé, en tant que distance objet (d(i)), des valeurs de distance qui diffèrent de la valeur de distance respectivement précédente de plus d'une valeur de seuil (ds) prédéfinie.

2. Procédé selon la revendication 1, **caractérisé en ce qu'**une valeur de vitesse (v) déterminée est mémorisée non modifiable tant que la distance objet (d (i)) déterminée dans un cycle augmente par rapport à la distance objet déterminée dans le cycle précédent.

3. Procédé selon une des revendications précédentes, **caractérisé en ce que** la distance objet (d(i)) déterminée dans un cycle est déterminée par la mesure du temps de parcours d'impulsion (te) d'une impulsion lumineuse envoyée dans une chambre de mesure et réfléchie à partir de la chambre de mesure.

4. Procédé selon la revendication 3, **caractérisé en ce que**, pour la mesure du temps de parcours d'impulsion (te) de l'impulsion lumineuse envoyée et réfléchie, on détermine un instant de réception (tr) en tant qu'instant de réception de l'impulsion lumineuse réfléchie en détectant l'impulsion lumineuse réfléchie pour la production d'un signal de réception (R) et en déterminant un instant (tr) correspondant au centre de gravité du signal de réception (R) en tant qu'instant de réception (tr) de l'impulsion lumineuse réfléchie.

5. Procédé selon la revendication 4, **caractérisé en ce que** le maximum (rm) du signal de réception (R) est déterminé, et **en ce que** seule une plage temporelle (ta) du signal de réception (R) située autour du maximum (rm) sert de base à la détermination de l'instant de réception (tr) de l'impulsion lumineuse réfléchie.

6. Procédé selon la revendication 5, **caractérisé en ce que** l'instant de réception (tr) de l'impulsion lumineuse réfléchie n'est déterminé que lorsque le maximum (rm) du signal de réception (R) est situé au-dessus d'un niveau de bruit (rn) prédéfini.

7. Procédé selon la revendication 6, **caractérisé en ce que** le signal de réception (R) ou la plage temporelle (ta) du signal de réception (R) servant de base à la détermination de l'instant de réception (tr) est réduit(e) d'une fraction de bruit prédéfinie avant la détermination de l'instant de réception (tr).

8. Procédé selon une des revendications 3 à 7, **caractérisé en ce qu'**une compensation de température est effectuée pour la réduction de contributions parasites dépendant de la température à partir du temps de parcours d'impulsion (te).

9. Procédé selon une des revendications 3 à 8, **caractérisé en ce que** des impulsions lumineuses sont envoyées dans différentes sections de chambre de la chambre de mesure représentant respectivement un canal, et **en ce que** les impulsions lumineuses réfléchies sont analysées par rapport aux canaux.

10. Procédé selon une des revendications précédentes pour la détection d'une menace de collision de véhicule avec un objet se rapprochant du véhicule.

## Claims

1. A method for measuring the relative velocity (v) between an object and a reference location, in which the object distance (d (i)) between the object and the reference location is determined cyclically in each case after completion of a specified cycle period (Tc), and the number (z) of cycles is determined within which the object distance (d (i)) changes to the extent that a specified distance band ($\Delta X$), which is restricted by an upper distance threshold value (Xo) and a lower distance threshold value (Xu) is fully passed through, and in which from the difference (Ad) between the object distance (d (m)) which is determined before entry into the distance band ($\Delta X$) and the object distance (d (n+1)) which is determined following exit from the distance band ($\Delta X$), and from the number (z) of cycles, the relative velocity (v) of the object is calculated, **characterized in that** the measurement of the relative velocity ends and is restarted when in a specific number (Emax) of successive cycles, distance values are determined as the object distance (d (i)) which differ from the respective previous distance value by more than a specified threshold value (ds).

2. A method according to claim 1, **characterized in that** a determined velocity value (v) is memorized unchangeably until the object distance (d(i)) determined in a cycle increases in relation to the object distance determined in the previous cycle.

3. A method according to any one of the preceding claims, **characterized in that** the object distance (d(i)) determined in a cycle by measuring the impulse run time (te) of a light impulse which is transmitted into a measuring chamber and which is reflected back from the measuring chamber.

4. A method according to claim 3, **characterized in that** in order to measure the impulse run time (te) of the transmitted and reflected back light impulse, a reception time point (tr) is determined as the time point of the reception of the reflected back light impulse by detecting the reflected back light impulse for generating a receiving signal (R), and determining a time point (tr) which corresponds to the core of the receiving signal (R) as the reception time point (tr) of the reflected back light impulse.

5. A method according to claim 4, **characterized in that** the maximum (rm) of the receiving signal (R) is determined, and that only a time period (ta) of the receiving signal (R) which is approximate to the maximum (rm) is used as a basis for determining the reception time point (tr) of the reflected back light impulse.

6. A method according to claim 5, **characterized in that** the reception time point (tr) of the reflected back light impulse is only determined when the maximum (rm) of the receiving signal (R) lies above a specified noise level (m).

7. A method according to claim 6, **characterized in that** the receiving signal (R) or the time period (ta) of the receiving signal (R) which is used as the basis for determining the reception time point (tr) is reduced prior to determining the reception time point (tr) by a specified noise component.

8. A method according to any one of claims 3 to 7, **characterized in that** a temperature compensation is made in order to reduce temperature-dependent interference inputs from the impulse run time (te).

9. A method according to any one of claims 3 to 8, **characterized in that** light impulses are transmitted into different spatial sections of the measuring chamber which respectively represent one channel, and that the reflected back light impulses are evaluated in relation to the channels.

10. The use of the method according to any one of the preceding claims for detecting a threatened collision between a vehicle and an object which is approaching the vehicle.

FIG.1a

FIG.1b

FIG.1c

EP 1 488 254 B1

FIG.2

EP 1 488 254 B1

FIG. 3a

FIG.3b

```
        ┌─┐
        │2│── 210
        └┬┘
         │
         ▼
      ╱╲ ── 300                    ── 301
     ╱    ╲          ja      ┌──────────────┐
    ╱ z > 1 ?╲ ──────────────▶│  v berechnen │
    ╲d(i) < Xu?╱              └──────┬───────┘
     ╲      ╱                        │
      ╲  ╱                           │
  nein │ ◀───────────────────────────┘
       ▼
      ╱╲ ── 302                    ── 303
     ╱    ╲          ja      ┌──────────────┐
    ╱ v ≠ v0?╲ ──────────────▶│    v = v0    │
    ╲d(i) > Xu?╱              └──────┬───────┘
     ╲      ╱                        │
      ╲  ╱                           │
  nein │                             │
       ▼                             │
┌──────────────────┐                 │
│v solange merken, bis│── 304        │
│  d(i) > d(i-1)   │                 │
└────────┬─────────┘                 │
         │ ◀──────────────────────────┘
         ▼
┌──────────────────┐
│· Daten übergeben │── 305
└────────┬─────────┘
         ▼
     ╭────────╮
     │ return │
     ╰────────╯
          ── 306
```

FIG.3C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4115747 C2
- US 5621514 A
- US 5471215 A